# EUROPÄISCHE PATENTSCHRIFT

(11) **EP 1 611 370 B1**
(45) Veröffentlichungstag und Bekanntmachung des Hinweises auf die Patenterteilung: **17.01.2007**
(21) Anmeldenummer: 04725308.3
(22) Anmeldetag: 02.04.2004
(51) Int. Cl.: F16H 3/66

(54) **MEHRSTUFEN-AUTOMATGETRIEBE**
MULTI-STAGE AUTOMATIC TRANSMISSION
BOITE DE VITESSES AUTOMATIQUE A PLUSIEURS ETAGES

(30) Priorität: 07.04.2003 DE 10315709
(43) Veröffentlichungstag der Anmeldung: 04.01.2006
(73) Patentinhaber: ZF FRIEDRICHSHAFEN Aktiengesellschaft, 88038 Friedrichshafen (DE)
(72) Erfinder: ZIEMER, Peter, 88069 Tettnang (DE)
(86) Internationale Anmeldenummer: PCT/EP2004/003487
(87) Internationale Veröffentlichungsnummer: WO 2004/090378

(56) Entgegenhaltungen:
- DE-A- 10 213 820
- US-B1- 6 425 841
- PATENT ABSTRACTS OF JAPAN Bd. 2002, Nr. 11, 6. November 2002 (2002-11-06) -& JP 2002 213545 A (AISIN AW CO LTD), 31. Juli 2002 (2002-07-31)

## Beschreibung

Die vorliegende Erfindung betrifft ein Mehrstufen-Automatgetriebe für ein Kraftfahrzeug, nach dem Oberbegriff des Patentanspruchs 1 bzw. nach dem Oberbegriff des Patentanspruchs 6.

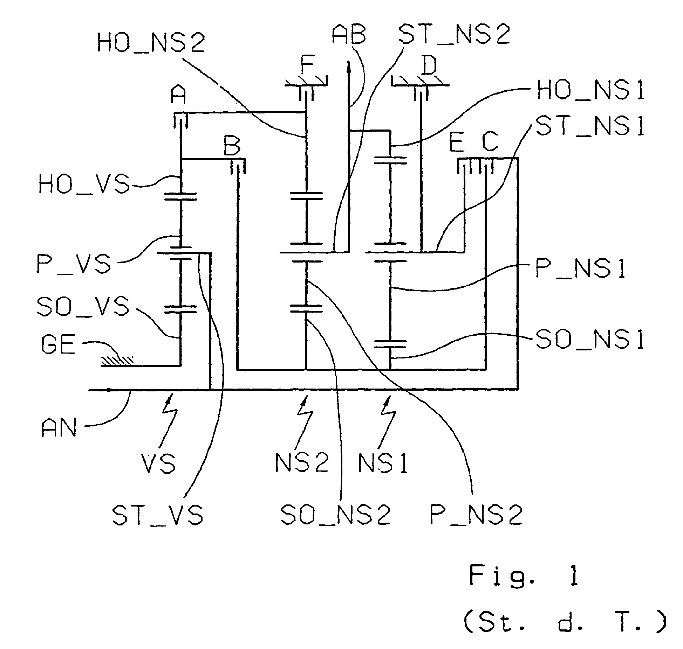

Aus der gattungsgemäßen DE 102 13 820 A1 sind mehrere Planetenradsatz-Anordnungen für ein Wandler-Automatgetriebe mit acht gruppenschaltungsfrei schaltbaren Vorwärtsgängen und einem Rückwärtsgang bekannt, jeweils mit einem als Einfachplanetenradsatz ausgebildetem Overdrive-Vorschaltradsatz, einem als Zweisteg-Vierwellen-Getriebe ausgebildeten Hauptradsatz, sowie sechs Schaltelementen (vier Kupplungen, zwei Bremsen). Der Hauptradsatz ist entweder als Ravigneaux-Radsatz ausgeführt oder weist zwei miteinander gekoppelte Einfach-Planetenradsätze auf. In Fig. 1 ist als Stand der Technik eine der Anordnungsvarianten der DE 102 13 820 A1 dargestellt, bei der der Hauptradsatz als "Simpson-Radsatz" ausgebildet ist. Bekanntlich ist eine solche Planetenradsatzbauform hinsichtlich Radsatzbelastung (Blindleistung) und Planetenraddrehzahlen und damit hinsichtlich Wirkungsgrad vergleichsweise günstig. Wie in Fig. 1 ersichtlich, weist der Vorschaltplanetenradsatz VS ein Sonnenrad SO_VS, ein Hohlrad HO_VS sowie einen Steg ST_VS mit Planetenrädern P_VS auf. Der Hauptradsatz wird gebildet aus einem ersten und einem zweiten Einfach-Planetenradsatz NS1, NS2, jeweils mit einem Sonnenrad SO_NS1, SO_NS2, einem Hohlrad HO_NS1, HO_NS2 und einem Steg ST_NS1, ST_NS2 mit Planetenrädern P_NS1, P_NS2. Das Sonnenrad SO_VS des Vorschaltradsatzes VS ist an einem Getriebegehäuse GE festgesetzt. Der Steg ST_VS ist als Eingangselement des Vorschaltradsatzes VS fest mit einer Antriebswelle AN des Getriebes verbunden. Das Hohlrad HO_VS bildet das Ausgangselement des Vorschaltradsatzes VS. Die numerische Bezeichnung der vier Wellen des als Zweisteg-Vierwellen-Getriebe ausgebildeten Hauptradsatzes orientiert sich an der Reihenfolge auf dem Drehzahlplan des Radsatzschemas. Die fest miteinander verbundenen Sonnenräder SO_NS1, SO_NS2 der Planenradsätze NS1, NS2 bilden die erste Welle des Hauptradsatzes und sind über das Schaltelement B mit dem Hohlrad HO_VS des Vorschaltradsatzes VS und über das Schaltelement C mit der Antriebswelle AN verbindbar. Der Steg ST_NS1 des Planetenradsatzes NS1 bildet die zweite Welle des Hauptradsatzes und ist über das Schaltelement D am Getriebegehäuse GE festsetzbar und über das Schaltelement E mit der Antriebswelle AN verbindbar. Steg ST_NS2 des Radsatzes NS2 und Hohlrad HO_NS1 des Radsatzes NS1 sind fest miteinander verbunden, bilden die dritte Welle des Hauptradsatzes und sind als Ausgangselement des Hauptradsatzes mit einer Abtriebswelle AB des Auotmatgetriebes verbunden. Das Hohlrad HO_NS2 des Planetenradsatzes NS2 bildet die vierte Welle des als Zweisteg-Vierwellen-Getriebe ausgebildeten Hauptradsatzes und ist über das Schaltelement A mit dem Hohlrad HO_VS des Vorschaltradsatzes VS verbindbar und über das Schaltelement F am Getriebegehäuse GE festsetzbar. Entsprechend dieser Anbindung sind die gekoppelten Sonnenräder SO_NS1, SO_NS2 auch mit dem Hohlrad HO_NS2 verbindbar, und zwar über ein gleichzeitiges Schalten der Schaltelemente A und B. Entsprechend dieser Anbindung sind die gekoppelten Sonnenräder SO_NS1, SO_NS2 auch mit dem Steg ST_NS1 verbindbar, und zwar über ein gleichzeitiges Schalten der Schaltelemente C und E.

Entsprechend der beschriebenen Anbindung der einzelnen Planetenradsatzelemente untereinander und zu den sechs Schaltelementen ist diese Planetenradsatzschema der DE 102 13 820 A1 nur geeignet für eine Anwendung mit nicht koxialer Anordnung von Antriebs- und Abtriebswelle AN, AB, also beispielsweise für ein Kraftfahrzeug mit einem quer zur Fahrtrichtung angeordneten Antriebsmotor ("Front-Quer-Antrieb").

Ausgehend von dem beschriebenen Stand der Technik liegt der vorliegenden Erfindung die Aufgabe zugrunde, ein Getriebeschema für ein Mehrstufen-Automatgetriebe für ein Kraftfahrzeug mit Standardantrieb zu schaffen, also mit koaxial zueinander angeordneter Antriebs- und Abtriebswelle, mit sechs Schaltelementen, durch deren paarweises selektives Schließen eine Getriebeeingangsdrehzahl der Antriebswelle gruppenschaltungsfrei auf die Abtriebswelle übertragbar ist, mit einem ständig mit der Antriebswelle verbundenen Overdrive-Vorschaltplanetenradsatz, mit einem Hauptradsatz, der über ein Hauptradsatzelement ständig mit der Abtriebswelle verbunden und mit einem Ausgangselement des vorschaltplanetenradsatzes verbindbar ist und ähnliche Vorteile eines Simpson-Planetenradsatzes aufweist. Dabei soll das Automatgetriebe vorzugsweise acht Vorwärtsgänge und eine große Gesamtspreizung aufweisen.

Erfindungsgemäß gelöst wird die Aufgabe durch ein Mehrstufen-Automatgetriebe mit den Merkmalen des Patentanspruchs 1 bzw. des Patentanspruchs 6. Vorteilhafte Ausgestaltungen ergeben sich aus den Unteransprüchen.

Ausgehend vom genannten Stand der Technik weist das erfindungsgemäße Mehrstufen-Automatgetriebe eine Antriebswelle und eine Abtriebswelle auf, die nunmehr aber koaxial zueinander angeordnet sind, sowie sechs Schaltelemente (vier Kupplungen und zwei Bremsen), durch deren selektives Schließen eine Getriebeeingangsdrehzahl der Antriebswelle derart auf die Abtriebswelle übertragbar ist, daß zum Umschalten von einem Gang in den nächstfolgend höheren oder den nächstfolgend niedrigeren Gang von den gerade betätigten Schaltementen jeweils nur ein Schaltelement geöffnet und ein weiteres Schaltelement geschlossen wird.

Weiterhin weist das erfindungsgemäße Mehrstufen-Automatgetriebe einen einfachen Overdrive-Planetenradsatz als Vorschalt-Planetenradsatz sowie ein mehrgliedriges Planetengetriebe als Hauptradsatz auf. Ein Element (Sonnenrad) des Vorschalt-Planetenradsatzes ist fest mit einem Getriebegehäuses des Automatgetriebes verbunden. Ein Eingangselement (Steg) des Vorschalt-Planetenradsatzes ist fest mit der Antriebswelle verbunden. Ein Ausgangselement (Hohlrad) des Vorschalt-Planetenradsatzes ist über das erste und zweite Schaltelement mit mindestens zwei verschiedenen Elementen (gekoppelte Sonnenräder, ein Hohlrad) des Hauptradsatzes verbindbar. Mindestens zwei Elemente (gekoppelte Sonnenräder, ein Steg) des Hauptradsatzes sind über das dritte bzw. fünfte Schaltelement mit der Antriebswelle des Automatgetriebes verbindbar, wobei eines dieser Elemente (Steg) auch über das vierte Schaltelement am Getriebegehäuse festsetzbar ist. Ein weiteres Element (Hohlrad) des Hauptradsatzes ist ausschließlich über das sechste Schaltelement am Getriebegehäuse festsetzbar. Noch ein weiteres Element (ein mit einem Hohlrad gekoppelter Steg) des Hauptradsatzes schließlich bildet das Ausgangselement des Hauptradsatzes und ist ausschließlich fest mit der Abtriebswelle des Automatgetriebes verbunden.

Wie bei dem zuvor beschriebenen Stand der Technik der DE 102 13 820 A1 ist der Hauptradsatz analog zu einem Simpson-Planetenradsatz aufgebaut, mit den gleichen bekannten Vorteilen hinsichtlich Bauteilbelastung, Planetenraddrehzahlen und insbesondere Wirkungsgrad. Im Unterschied zur DE 102 13 820 A1 ist der Hauptradsatz des Mehrstufen-Automatgetriebe nicht als Zweisteg-Vierwellen-Getriebe ausgebildet, sondern erfindungsgemäß als gekoppeltes, reduziertes Dreisteg-Fünfwellen-Getriebe. Die Reduzierung des im Prinzip aus drei Nachschalt-Planetenradsätzen bestehenden Hauptradsatzes besteht darin, daß die Sonnenräder, die Planetenräder und die Stege des zweiten und dritten Nachschalt-Planetenradsatzes jeweils miteinander verbunden bzw. vereinigt sind. Somit beschränkt sich der bauliche Mehraufwand gegenüber dem Stand der Technik der DE 102 13 820 A1 auf ein weiteres Zentralrad.

Der erste Nachschalt-Planetenradsatz des erfindungsgemäßen reduzierten Dreisteg-Fünfwellen-Hauptradsatzes entspricht in Funktion und Anbindung dem ersten Planetenradsatz des in der DE 102 13 820 A1 beschriebenen Zweisteg-Vierwellen-Simpson-Hauptradsatzes. Der zweite Planetenradsatz des in der DE 102 13 820 A1 beschriebenen Zweisteg-Vierwellen-Simpson-Hauptradsatzes ist nunmehr ersetzt durch eine Kombination aus zwei Nachschalt-Planetenradsätzen, wobei diese Kombination - als ganzes betrachtet - mit den anderen Getriebekomponenten in gleicher Weise verbunden ist wie der zweite Planetenradsatz eines zuvor genannten Zweisteg-Vierwellen-Simpson-Hauptradsatzes. In einer ersten erfindungsgemäßen Lösung wird diese Kombination aus zwei einzelnen Einfach-Planetenradsätzen mit jeweils einem Hohlrad gebildet; entsprechend weist der Hauptradsatz dann drei einzelne Nachschalt-Planetenradsätze auf. In einer zweiten erfindungsgemäßen Lösung wird diese Kombination durch einem gekoppelten Nachschalt-Planetenradsatz mit einem Sonnenrad und zwei Hohlrädern gebildet.

Durch die Verwendung eines Dreisteg-Fünfwellen-Hauptradsatzes mit drei nicht gekoppelten Hohlrädern anstelle des aus dem Stand der Technik bekanten Zweisteg-Vierwellen-Simpson-Hauptradsatzes mit nur zwei nicht gekoppelten Hohlrädern kann nunmehr die schaltelementseitige Anbindung an das sechste Schaltelement (Bremse zum Festsetzen am Getriebegehäuse) und an das erste Schaltelement (Kupplung zur Verbindung zum Ausgangselement des Vorschalt-Planetenradsatzes) räumlich aufgetrennt werden. Hierdurch wiederum ist es möglich, das Verbindungselement zwischen dem Ausgangselement des Hauptradsatzes und der Abtriebswelle des Automatgetriebes so zu gestalten, daß Antriebs- und Abtriebswelle des Automatgetriebes koaxial zueinander angeordnet sein können und sich das Automatgetriebe somit für den Einbau in einem Kraftfahrzeug mit Standardantrieb eignet. Erfindungsgemäß greift dieses Verbindungselement räumlich gesehen axial zwischen den beiden Hohlrädern des zweiten und dritten Nachschalt-Planetenradsatzes bzw. des gekoppelten Nachschaltradsatzes hindurch und übergreift das Hohlrad des dritten Nachschalt-Planetenradsatzes bzw. das zweite Hohlrad des gekoppelten Nachschaltradsatzes in axia-ler Richtung gesehen radial vollständig.

Die erfindungsgemäße Koppelung der einzelnen Elemente der Planetenradsätze untereinander und zu den sechs Schaltelementen, sowie deren Anbindung an Antriebs- und Abtriebswelle des Mehrstufen-Getriebes wird nun anhand der folgenden Figuren näher beschrieben. Gleichartige Bauelemente sind dabei mit gleichen Bezugszeichen versehen. Es zeigen
- Fig. 1: ein Getriebeschema eines 8-Gang-Automatgetriebes gemäß dem Stand der Technik, für Front-Quer-Antrieb;
- Fig. 2: ein erstes Ausführungsbeispiel für ein Getriebeschema eines erfindungsgemäßen Mehrstufen-Automatgetriebes für Standard-Antrieb;
- Fig. 3: ein zweites Ausführungsbeispiel für ein Getriebeschema eines erfindungsgemäßen Mehrstufen-Automatgetriebes für Standard-Antrieb;
- Fig. 4: eine Schaltlogik des erfindungsgemäßen Mehrstufen-Automatgetriebes gemäß Fig. 2 und Fig. 3; und
- Fig. 5: einen Drehzahlplan des erfindungsgemäßen Mehrstufen-Automatgetriebes gemäß Fig. 2 und Fig. 3.

Das in Fig. 1 dargestellte Getriebeschema gemäß dem Stand der Technik der DE 102 13 820 A1 wurde bereits eingangs im Detail erläutert.

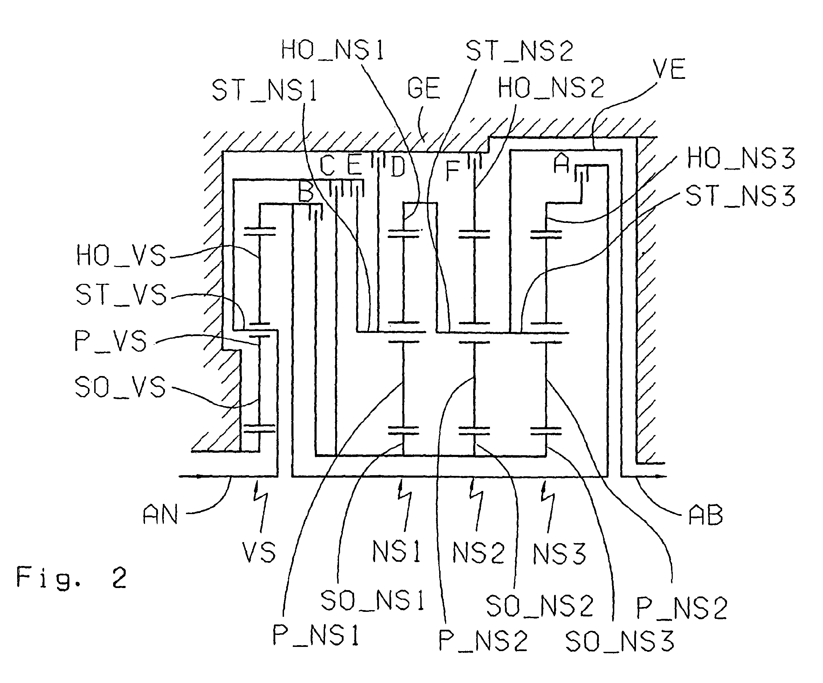

Fig. 2 zeigt nun ein erstes Ausführungsbeispiel für ein Getriebeschema eines erfindungsgemäßen Mehrstufen-Automatgetriebes für Standard-Antrieb. Wie in Fig. 1 ist mit AN die Antriebswelle des Automatgetriebes bezeichnet, mit AB die Abtriebswelle des Automatgetriebes, mit GE das Getriebegehäuse und mit A bis F die einzelnen sechs Schaltelemente. Das Mehrstufen-Automatgetriebe weist insgesamt vier einzelne Planetenradsätze auf, die alle koxial zueinander angeordnet sind, einen als Overdrive-Planetenradsatz ausgebildeten Vorschaltradsatzes VS und drei Nachschaltradsätze NS1, NS2, NS3. Das Sonnenrad SO_VS des Vorschaltradsatzes VS ist an dem Getriebegehäuse GE festgesetzt. Der Steg ST_VS bildet das Eingangselement des Vorschaltradsatzes VS und ist fest mit der Antriebswelle AN verbunden. Das Hohlrad HO_VS bildet das mit einzelnen Elementen des Hauptradsatzes verbindbare Ausgangselement des Vorschaltradsatzes VS.

Der aus den drei Nachschaltradsätzen NS1, NS2, NS3 gebildete Hauptradsatz ist als Dreisteg-Fünfwellen-Getriebe ausgebildet. Die im folgenden verwendete numerische Bezeichnung der fünf Wellen des Hauptradsatzes orientiert sich an einer Reihenfolge auf einem Drehzahlplan des Radsatzschemas. Die erste Hauptradsatzwelle wird gebildet durch die drei fest miteinander verbundenen Sonnenräder SO_NS1, SO_NS2, SO_NS3 der drei Nachschaltradsätze NS1, NS2, NS3 und sind über das zweite Schaltelement B mit dem Hohlrad HO_VS des Vorschaltradsatzes VS und über das dritte Schaltelement C mit der Antriebswelle AN verbindbar. Der Steg ST_NS1 des Nachschaltradsatzes NS1 bildet die zweite Hauptradsatzwelle und ist über das Schaltelement D am Getriebegehäuse GE festsetzbar und über das Schaltelement E mit der Antriebswelle AN verbindbar. Hohlrad HO_NS1 des Nachschaltradsatzes NS1, Steg ST_NS2 des Nachschaltradsatzes NS2 und Steg ST_NS3 des Nachschaltradsatzes NS3 sind als dritte Hauptradsatzwelle fest miteinander verbunden und sind als Ausgangselement des Hauptradsatzes mit der Abtriebswelle AB des Automatgetriebes verbunden. Das Hohlrad HO_NS2 des Nachschaltradsatzes NS2 bildet die vierte Hauptradsatzwelle und ist über das Schaltelement F am Getriebegehäuse GE festsetzbar. Das Hohlrad HO_NS3 schließlich bildet die fünfte Hauptradsatzwelle und ist über das Schaltelement A mit dem Hohlrad HO_VS des Vorschaltradsatzes VS verbindbar. Entsprechend dieser Bauteilanbindung sind die gekoppelten Sonnenräder SO_NS1, SO_NS2, SO_NS2 des Hauptradsatzes auch mit dem Hohlrad HO_NS3 des dritten Nachschaltradsatzes verbindbar, und zwar über ein gleichzeitiges Schalten der Schaltelemente A und B. Entsprechend dieser Anbindung sind die gekoppelten Sonnenräder SO_NS1, SO_NS2, SO_NS3 des Hauptradsatzes auch mit dem Steg ST_NS1 des ersten Nachschaltradsatzes verbindbar, und zwar über ein gleichzeitiges Schalten der Schaltelemente C und E.

In der in Fig. 2 als erstes Ausführungsbeispiel dargestellten Anordnung sind die drei Nachschaltradsätze NS1, NS2, NS3 axial in einer Reihe nebeneinander angeordnet. Dabei ist der erste Nachschalradsatz NS1 innerhalb des Getriebegehäuses GE dem Vorschaltradsatz zugewandt und der dritte Nachschaltradsatz NS3 auf der dem Vorschaltradsatz VS gegenüberliegenden Seite des Automatgetriebes. Der Vorschaltradsatz VS ist dabei auf der Seite des Automatgetriebes angeordnet, die einem - in Fig. 2 zur Vereinfachung nicht dargestellten - Antriebsmotor des Automatgetriebes zugewandt ist. Entsprechend ist der dritte Nachschaltradsatz NS3 auf der dem Antriebsmotor gegenüberliegenden Seite des Automatgetriebes angeordnet.

Der Vorschaltradsatz VS grenzt in dem ersten Ausführungsbeispiel unmittelbar an der Seite des Getriebegehäuses GE an, die dem nicht dargestellten Antriebsmotor zugewandt ist. Auf der dem Antriebsmotor abgewandten Seite des Vorschaltradsatzes VS, also auf dessen dem ersten Nachschaltradsatz NS1 zugewandten Seite, ist die Kupplung B angeordnet. Die Kupplung B, insbesondere eine zur Vereinfachung der Darstellung in Fig. 2 nicht eingezeichnete Servoeinrichtung der Kupplung B, ist räumlich gesehen also axial zwischen dem Vorschaltradsatzes VS und dem ersten Nachschaltradsatz NS1 angeordnet. In einer anderen Ausgestaltung können insbesondere die Lamellen der Kupplung B auch zumindest teilweise in axialer Richtung gesehen radial oberhalb des Vorschaltradsatzes VS angeordnet sein. In noch einer anderen Ausgestaltung können insbesondere die Lamellen der Kupplung B auch zumindest teilweise auf der dem ersten Nachschaltradsatz NS1 abgewandten Seite des Vorschaltradsatzes VS angeordnet sein, wobei dann ein Ausgangselement der Kupplung B das Hohlrad HO_VS des Vorschaltradsatzes VS in axialer Richtung radial übergreift.

Die Kupplung E ist räumlich gesehen näher am ersten Nachschaltradsatz NS1 angeordnet als die Kupplung C, insbesondere sind die Lamellen der Kupplung E näher am ersten Nachschaltradsatz NS1 angeordnet als die Lamellen der Kupplung C. In dem in Fig. 2 dargestellten Ausführungsbeispiel sind sowohl die Lamellen der Kupplung C als auch die Lamellen der Kupplung E auf zumindest ähnlichem Durchmesser angeordnet, in axialer Richtung gesehen zwischen den Lamellen der Kupplung B und dem ersten Nachschaltradsatz NS1. Zur Einsparung von axialer Getriebebaulänge können in einer anderen Ausgestaltung die Lamellen der Kupplung C auch in axialer Richtung gesehen zumindest teilweise radial oberhalb der Lamellen der Kupplung B angeordnet sein. In noch einer anderen baulängensparender Ausgestaltung können die Lamellen der Kupplung C auch in axialer Richtung gesehen zumindest teilweise radial oberhalb des Vorschaltradsatzes VS und die Lamellen der Kupplung E zumindest teilweise in axialer Richtung gesehen radial oberhalb der Lamellen der Kupplung B angeordnet sein.

Die Kupplung A grenzt in dem in Fig. 2 dargestellten Ausführungsbeispiel unmittelbar an den dritten Nachschaltradsatz NS3 an, auf dessen den zweiten Nachschaltradsatz NS2 abgewandten Seite. Die Kupplung A ist also unmittelbar an der getriebeabtriebsnahen Seite des Getriebegehäuses GE angeordnet. Dabei übergreift das den dritten Nachschaltradsatz NS3 übergreifende Verbindungselement VE, auch die Kupplung A in axialer Richtung gesehen vollständig. Eine - in Fig. 2 zur Vereinfachung nicht dargestellte - Servoeinrichtung der Kupplung A ist zweckmäßigerweise axial zwischen dem dritten Nachschaltradsatz NS3 und einem zumindest überwiegend senkrechten Abschnitt eines Eingangselementes der Kupplung A (im Ausführungsbeispiel ein topfförmiger Außenlamellenträger) angeordnet, axial unmittelbar angrenzend an den dritten Nachschaltradsatz NS1.

Zweckmäßigerweise sind die Lamellen der Bremse D im Bereich nahe dem Hohlrad HO_NS1 des ersten Nachschaltradsatzes NS1 angeordnet und die Lamellen der Bremse F im Bereich des Hohlrades HO_NS2 des zweiten Nachschaltradsatzes NS2.

Für eine Bauteilschachtelung innerhalb des Getriebegehäuses GE ist die anhand Fig. 2 beschriebene Anordnung der einzelnen Schaltelemente relativ zu den einzelnen Planetenradsätzen sehr günstig. Ermöglicht wird die Verschachtelung durch den Durchgriff des mit der Antriebswelle AN fest verbundenen kombinierten Eingangselementes der Kupplungen C, E axial durch den Steg ST_VS des Vorschaltradsatzes VS hindurch. Vorzugsweise ist das Eingangselement der Kupplungen C, E als Außenlamellenträger ausgebildet, mit einem ersten Abschnitt radialer Erstreckung, der räumlich auf der dem Hauptradsatz zugewandten Seite des Vorschaltradsatzes VS angeordnet und mit der Antriebswelle AN fest verbunden ist, mit einem zweiten Abschnitt axialer Erstreckung, der sich an den ersten Abschnitt anschließt und den Steg ST_VS in axialer Richtung durchgreift, mit einem dritten Abschnitt radialer Erstreckung, der sich an den zweiten Abschnitt anschließt und auf der dem Hauptradsatz gegenüberliegenden Seite des Vorschaltradsatzes VS angeordnet ist und sich in radialer Richtung nach außen erstreckt bis auf einen Durchmesser oberhalb des Vorschaltradsatzes VS, sowie mit einem vierten Abschnitt axialer Erstreckung, der sich an den dritten Abschnitt anschließt und in axialer Richtung radial oberhalb des Vorschaltradsatzs VS in Richtung des Hauptradsatzes erstreckt bis zu einem Mitnahmeprofil für Lamellen der Kupplung C und Kupplung E und dabei den Vorschaltradsatzs VS axial vollständig übergreift.

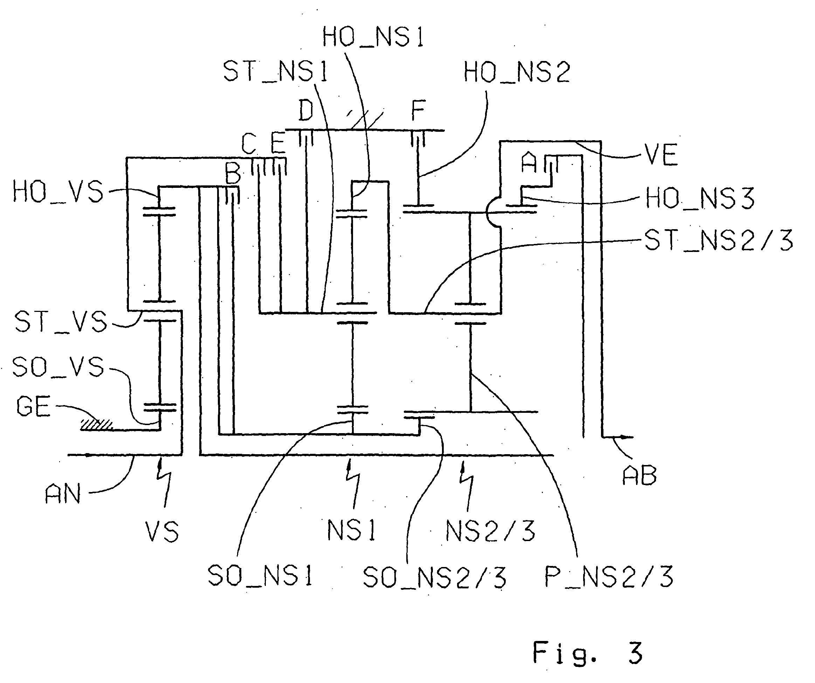

Fig. 3 zeigt nun ein zweites Ausführungsbeispiel für ein Getriebeschema eines erfindungsgemäßen Mehrstufen-Automatgetriebes für Standard-Antrieb, basierend auf dem anhand Fig. 2 zuvor detailliert erläutertem ersten Ausführungsbeispiel. Im Unterschied zum ersten erfindungsgemäßen Ausführungsbeispiel sind der zweite und dritte Nachschaltradsatz nunmehr zu einem gekoppelten Nachschaltradsatz NS23 zusammengefaßt, mit einem gemeinsamen Sonnenrad SO_NS23, mit einem gemeinsamen Steg ST_NS23, an dem mit dem Sonnenrad SO_NS23 kämmende gemeinsame lange Planetenräder P_NS23 gelagert sind, sowie mit zwei getrennten Hohlrädern HO_NS2 und HO_NS3, die beide mit den langen Planetenrädern P_NS23 kämmen. Wie in Fig. 2 ist das Hohlrad HO_NS2 mit einem Eingangselement (vorzugsweise einem Innenlamellenträger) der Bremse F und das Hohlrad HO_NS3 mit einem Ausgangselement (vorzugsweise einem Innenlamellenträger) der Kupplung A verbunden. Das Sonnenrad SO_NS23 ist mit dem Sonnenrad SO_NS1 des ersten Nachschaltradsatzes NS1 verbunden. Der Steg ST_NS23 ist gleichzeitig mit dem Hohlrad HO_NS1 des ersten Nachschaltradsatzes NS1 und der Abtriebswelle AB verbunden, wobei das Verbindungselement VE nunmehr auf der dem ersten Nachschaltradsatz NS1 abgewandten Seite des gekoppelten Nachschaltradsatzes NS23 an den Steg ST_NS23 angebunden ist, in axialer Richtung gesehen zwischen den beiden Hohlrädern HO_NS2 und HO_NS3 radial hindurchgreift und das Hohlrad HO_NS3 und die Kupplung A vollständig übergreift.

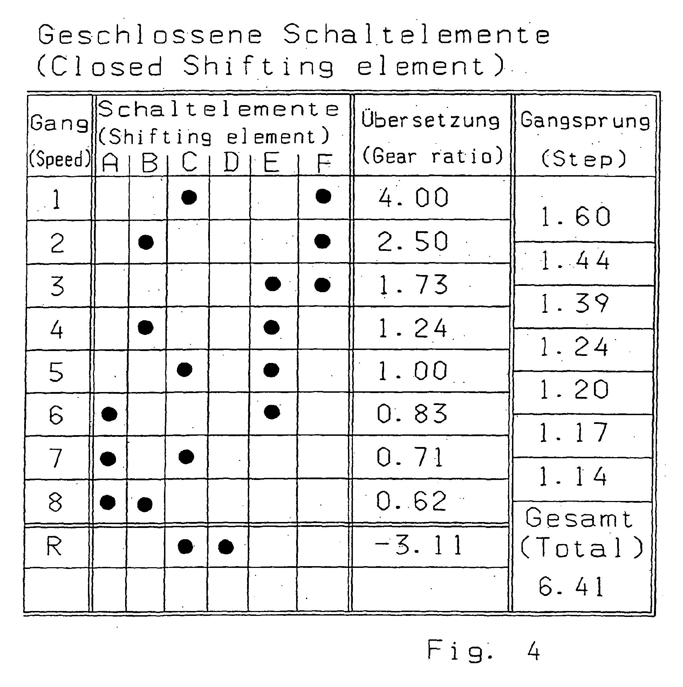

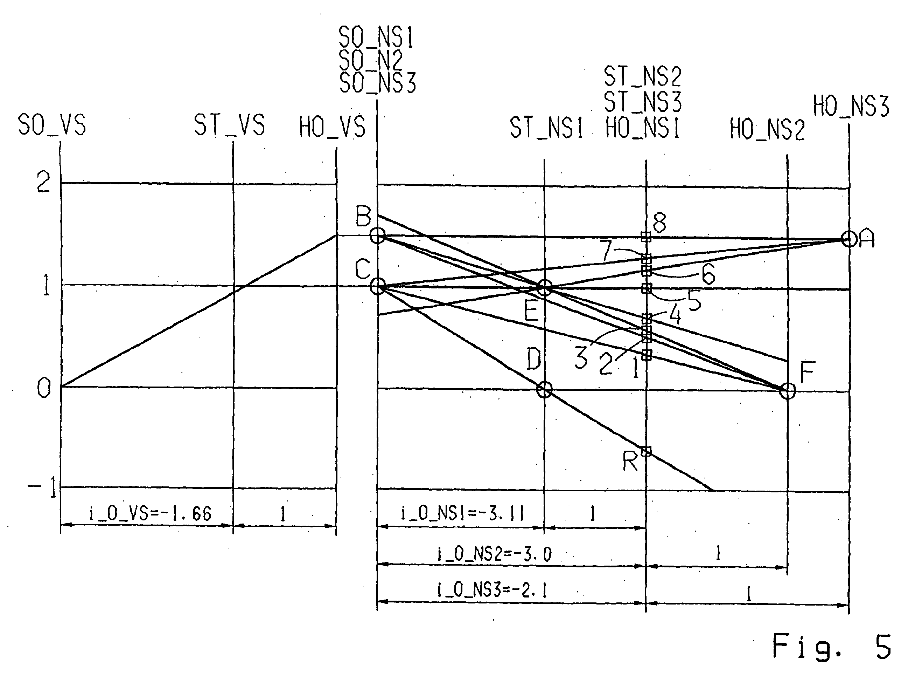

Fig. 4 zeigt eine Schaltlogik der in Fig. 2 und Fig. 3 dargestellten Ausführungsbeispiele eines erfindungsgemäßen Mehrstufen-Automatgetriebes, mit den entsprechenden Übersetzungen und Gangsprüngen. Fig. 5 zeigt den dazugehörigen Drehzahlplan. Die in dem Drehzahlplan eingetragenen Bezeichnungen der einzelnen Radsatzwellen entsprechen den im Rahmen der Beschreibung von Fig. 2 verwendeten Bezeichnungen. Zusätzlich eingetragen sind die Standübersetzungen der einzelnen Radsätze, nämlich i_0_VS für den Vorschaltradsatz VS, i_0_NS1 für den ersten Nachschaltradsatz NS1, 1_0_NS2 für den zweiten Nachschaltradsatz NS2, sowie 1_0_NS3 für den dritten Nachschaltradsatz NS3.

Durch selektives Schließen von jeweils zwei der insgesamt sechs Schaltelemente über die in Fig. 4 dargestellte Schaltlogik sind acht Vorwärtsgänge jeweils ohne Gruppenschaltung schaltbar. Bei einer Umschaltung von einem Gang in den nächstfolgend höheren oder in den nächstfolgend niedrigeren Gang wird also von den gerade betätigten Schaltelementen jeweils nur ein Schaltelement geöffnet und ein weiteres, zuvor nicht betätigtes Schaltelement geschlossen.

Im ersten Vorwärtsgang sind Kupplung C und Bremse F geschlossen, d.h. die vierte Hauptradsatzwelle (Hohlrad HO_NS2) steht still und die erste Hauptradsatzwelle (Sonnenräder SO_NS1, SO_NS2, SO_NS3 bzw. SO_NS1, SO_NS23) ist mit der Antriebswelle AN verbunden. Im zweiten Vorwärtsgang sind Kupplung B und Bremse F geschlossen, d.h. die vierte Hauptradsatzwelle (Hohlrad HO_NS2) steht unverändert still und die erste Hauptradsatzwelle (Sonnenräder SO_NS1, SO_NS2, SO_NS3 bzw. SO_NS1, SO_NS23) ist nun mit dem Ausgangselement (Hohlrad HO_VS) des Vorschaltradsatzes VS verbunden. Im dritten Vorwärtsgang sind Kupplung E und Bremse F geschlossen, d.h. die vierte Hauptradsatzwelle (Hohlrad HO_NS2) steht unverändert still und die zweite Hauptradsatzwelle (Steg ST_NS1) ist nun mit der Antriebswelle AN verbunden. Im vierten Vorwärtsgang sind die Kupplungen B und E geschlossen, d.h. die erste Hauptradsatzwelle (Sonnenräder SO_NS1, SO_NS2, SO_NS3 bzw. SO_NS1, SO_NS23) ist mit dem Ausgangselement (Hohlrad HO_VS) des Vorschaltradsatzes VS verbunden und die zweite Hauptradsatzwelle (Steg ST_NS1) mit der Antriebswelle AN. Im fünften Vorwärtsgang sind die Kupplungen C und E geschlossen, d.h. die erste Hauptradsatzwelle (Sonnenräder SO_NS1, SO_NS2, SO_NS3 bzw. SO_NS1, SO_NS23) ist nun gleichzeitig mit der Antriebswelle AN und der zweiten Hauptradsatzwelle (Steg ST_NS1) verbunden. Im sechsten Vorwärtsgang sind die Kupplungen A und E geschlossen, d.h. die fünfte Hauptradsatzwelle (Hohlrad HO_NS3) ist mit dem Ausgangselement (Hohlrad HO_VS) des Vorschaltradsatzes VS verbunden und die zweite Hauptradsatzwelle (Steg ST_NS1) mit der Antriebswelle AN. Im siebten Vorwärtsgang sind die Kupplungen A und C geschlossen, d.h. die fünfte Hauptradsatzwelle (Hohlrad HO_NS3) ist - wie im sechsten Gang - mit dem Ausgangselement (Hohlrad HO_VS) des Vorschaltradsatzes VS verbunden und die erste Hauptradsatzwelle (Sonnenräder SO_NS1, SO_NS2 und SO_NS3 bzw. SO_NS1 und SO_NS23) nunmehr mit der Antriebswelle AN. Im achten Vorwärtsgang schließlich sind die Kupplungen A und B geschlossen, d.h. die fünfte Hauptradsatzwelle (Hohlrad HO_NS3) ist nun gleichzeitig mit der ersten Hauptradsatzwelle (Sonnenräder SO_NS1, SO_NS2 und SO_NS3 bzw. SO_NS1 und SO_NS23) und dem Ausgangselement (Hohlrad HO_VS) des Vorschaltradsatzes VS verbunden.

Wie in Fig. 4 weiterhin ersichtlich, sind in einem Rückwärtsgang Kupplung C und Bremse D geschlossen und damit die erste Hauptradsatzwelle (Sonnenräder SO_NS1, SO_NS2 und SO_NS3 bzw. SO_NS1 und SO_NS23) mit der Antriebswelle AN verbunden und die zweite Hauptradsatzwelle (Steg ST_NS1) am Getriebegehäuse GE festgesetzt.

In vorteilhafter Weise kann das dritte Schaltelement (Kupplung C) als im Automatgetriebe integriertes Anfahrelement verwendet werden, mit dem das Kraftfahrzeug sowohl in Vorwärts- als auch in Rückwärtsfahrtrichtung anfahren kann, ohne das eine Drehrichtungsumkehr an den Reibelementen des Schaltelementes beim Reversieren des Kraftfahrzeugs auftritt.

Ist ein Anfahren auch im zweiten und/oder dritten Vorwärtsgang über jeweils das gleiche getriebeinterne Schaltelement gewünscht, so kann das sechste Schaltelement (Bremse F) als Anfahrelement vorgesehen sein. In diesem Fall erfolgt das Anfahren im Rückwärtsgang über ein weiteres getriebeinternes Schaltelement, entweder über das dritte Schaltelement (Kupplung C) oder über das vierte Schaltelement (Bremse D). Die elektrohydraulische Ansteuerung der beiden Anfahrschaltelemente zum komfortablen Reversieren des Kraftfahrzeugs ist entsprechend aufwändiger als im zuvor beschriebenen Fall mit nur einem Anfahrschaltelement für beide Fahrtrichtungen.

Selbstverständlich ist das erfindungsgemäße Mehrstufengetriebe aber auch mit einem separaten Anfahrelement kombiniert werden, beispielsweise mit einem Drehmomentwand-ler oder einer dem Mehrstufengetriebe vorgelagerten separaten Anfahrkupplung.

In dem in Fig. 2 dargestellten ersten Ausführungsbeispiel eines erfindungsgemäßen Mehrstufen-Automatgetriebes kann die Standübersetzung des dritten Nachschaltradsatzes NS3 betragsmäßig kleiner, gleich oder größer sein als die Standübersetzung des zweiten Nachschaltradsatzes NS2. In den Drehzahlplan in Fig. 5 beispielhaft eingezeichnet ist eine Standübersetzung des dritten Nachschaltradsatzes NS3, die betragsmäßig kleiner ist als die Standübersetzung des zweiten Nachschaltradsatzes NS2. Entsprechend ist die fünfte Welle in dem Drehzahlplan "rechts" von der vierten Welle eingezeichnet. Durch diese Möglichkeit, die Standübersetzungen des zweiten und dritten Nachschaltradsatzes NS2, NS3 unabhängig voneinander zu wählen, ergibt sich ein weiterer Auslegungsspielraum für die Gangabstufung.

Ein dazu analoge Möglichkeit bietet sich für das anhand Fig. 3 beschriebene zweite Ausführungsbeispiel eines erfindungsgemäßen Mehrstufen-Automatgetriebes dadurch, daß die Planetenräder P_NS23 des gekoppelten Nachschaltradsatzs NS23 als Stufenplaneten ausgeführt werden. Ungeachtet, ob die erste Stufe des gestuften Planetenräder P_NS23 geometrisch größer ist als die zweite Stufe oder umgekehrt, kämmt dann das Sonnenrad SO_NS23 mit einer der beiden Stufen, das Hohlrad HO_NS2 mit der ersten Stufe und das Hohlrad HO_NS3 mit der zweiten Stufe des gestuften Planetenräder P_NS23.

### Bezugszeichen

- A: erstes Schaltelement (Kupplung)
- B: zweites Schaltelement (Kupplung)
- C: drittes Schaltelement (Kupplung)
- D: viertes Schaltelement (Bremse)
- E: fünftes Schaltelement (Kupplung)
- F: sechstes Schaltelement (Bremse)

- AN: Antriebswelle
- AB: Abtriebswelle
- GE: Getriebegehäuse
- VE: Verbindungselement

- VS: Vorschaltradsatz
- SO_VS: Sonnenrad des Vorschaltradsatzes
- HO_VS: Hohlrad des Vorschaltradsatzes
- ST_VS: Steg des Vorschaltradsatzes
- P_VS: Planetenräder des Vorschaltradsatzes

- NS1: erster Nachschaltradsatz
- SO_NS1: Sonnenrad des ersten Nachschaltradsatzes
- HO_NS1: Hohlrad des ersten Nachschaltradsatzes
- ST_NS1: Steg des ersten Nachschaltradsatzes
- P_NS1: Planetenräder des ersten Nachschaltradsatzes

- NS2: zweiter Nachschaltradsatz
- SO_NS2: Sonnenrad des zweiten Nachschaltradsatzes
- HO_NS2: Hohlrad des zweiten Nachschaltradsatzes
- ST_NS2: Steg des zweiten Nachschaltradsatzes
- P_NS2: Planetenräder des zweiten Nachschaltradsatzes

- NS3: dritter Nachschaltradsatz
- SO_NS3: Sonnenrad des dritten Nachschaltradsatzes
- HO_NS3: Hohlrad des dritten Nachschaltradsatzes
- ST_NS3: Steg des dritten Nachschaltradsatzes
- P_NS3: Planetenräder des dritten Nachschaltradsatzes

- NS23: gekoppelter Nachschaltradsatz
- SO_NS23: Sonnenrad des gekoppelten Nachschaltradsatzes
- ST_NS23: Steg des gekoppelten Nachschaltradsatzes
- P_NS23: Planetenräder des gekoppelten Nachschaltradsatzes

- i_0_VS: Standgetriebeübersetzung des Vorschaltradsatzes
- i_0_NS1: Standgetriebeübersetzung des ersten Nachschaltradsatzes
- i_0_NS2: Standgetriebeübersetzung des zweiten Nachschaltradsatzes
- i_0_NS3: Standgetriebeübersetzung des dritten Nachschaltradsatzes

## Patentansprüche

1. Mehrstufen-Automatgetriebe, mit einem als Overdrive-Planetenradsatz ausgebildeten Vorschaltradsatz (VS), mit einem als mehrgliedriges Planetengetriebe ausgebildeten Hauptradsatz, sowie mit sechs Schaltelementen (A, B, C, D, E, F), durch deren selektives Schließen eine Getriebeeingangsdrehzahl einer Antriebswelle (AN) des Mehrstufen-Automatgetriebes derart auf eine Abtriebswel-le (AB) des Mehrstufen-Automatgetriebes übertragbar ist, daß zum Umschalten von einem Gang in den nächstfolgend höheren oder den nächstfolgend niedrigeren Gang von den gerade betätigten Schaltementen jeweils nur ein Schaltelement geöffnet und ein weiteres Schaltelement geschlossen wird, wobei
- ein Sonnenrad (SO_VS) des Vorschaltradsatzes (VS) an einem Getriebegehäuse (GE) des Mehrstufen-Automatgetriebes festgesetzt ist,
- ein Steg (ST_VS) des Vorschaltradsatzes (VS) mit der Antriebswelle (AN) des Mehrstufen-Automatgetriebes verbunden ist,
- der Hauptradsatz einen ersten und einen zweiten Nachschaltradsatz (NS1, NS2) aufweist,
- ein Sonnenrad (SO_NS1) des ersten Nachschaltradsatzes (NS1) und ein Sonnenrad (SO_NS2) des zweiten Nachschaltradsatzes (NS2) miteinander verbunden sind und über das zweite Schaltelement (B) mit einem Hohlrad (HO_VS) des Vorschaltradsatzes (VS) und über das dritte Schaltelement (C) mit der Antriebswelle (AN) verbindbar sind,
- ein Steg (ST_NS1) des ersten Nachschaltradsatzes (NS1) über das vierte Schaltelement (D) an dem Getriebegehäuse (GE) festsetzbar ist und über das fünfte Schaltelement (E) mit der Antriebswelle (AN) verbindbar ist,
- ein Hohlrad (HO_NS1) des ersten Nachschaltradsatzes (NS1) und ein Steg (ST_NS2) des zweiten Nachschaltradsatzes (NS2) miteinander und mit der Abtriebswelle (AB) verbunden sind, und
- ein Hohlrad (HO_NS2) des zweiten Nachschaltradsatzes (NS2) über das sechste Schaltelement (F) an dem Getriebegehäuse (GE) festsetzbar ist,
**dadurch gekennzeichnet, daß** der Hauptradsatz zusätzlich einen dritten Nachschaltradsatz (NS3) aufweist, wobei
- ein Sonnenrad (SO_NS3) des dritten Nachschaltradsatzes (NS3) mit dem Sonnenrad (SO_NS2) des zweiten Nachschaltradsatzes (NS2) gekoppelt ist,
- ein Steg (ST_NS3) des dritten Nachschaltradsatzes (NS3) mit dem Steg (ST_NS2) des zweiten Nachschaltradsatzes (NS2) gekoppelt ist,
- ein Hohlrad (HO_NS3) des dritten Nachschaltradsatzes (NS3) über das erste Schaltelement (A) mit dem Hohlrad (HO_VS) des Vorschaltradsatzes (VS) verbindbar ist,
- zur Verbindung von Abtriebswelle (AB) und den gekoppelten Stegen (ST_NS2, ST_NS3) des zweiten und dritten Nachschaltradsatzes (NS2, NS3) ein Verbindungselement (VE) vorgesehen ist, welches räumlich gesehen axial zwischen den Hohlrädern (HO_NS2, HO_NS3) des zweiten und dritten Nachschaltradsatz (NS2, NS3) hindurchgreift und das Hohlrad (HO_NS3) des dritten Nachschaltradsatzes (NS3) in axialer Richtung gesehen radial vollständig übergreift, und
- Antriebswelle (AN) und Abtriebswelle (AB) zueinander koaxial angeordnet sind.

2. Mehrstufen-Automatgetriebe nach Anspruch 1, **dadurch gekennzeichnet, daß** der dritte Nachschaltradsatz (NS3) benachbart zum zweiten Nachschaltradsatz (NS2) angeordnet ist.

3. Mehrstufen-Automatgetriebe nach Anspruch 1, **dadurch gekennzeichnet, daß** der zweite und dritte Nachschaltradsatz (NS2, NS3) zu einem gekoppelten Nachschaltradsatz (NS23) zusammengefaßt sind, mit zwei Hohlrädern (HO_NS2, HO_NS3), einem gemeinsamen Sonnenrad (SO_NS23), sowie einem gemeinsamen Steg (ST_NS23) mit gemeinsamen Planetenrädern (P_NS23).

4. Mehrstufen-Automatgetriebe nach Anspruch 1, 2 oder 3, **dadurch gekennzeichnet, daß** eine Standgetriebeübersetzung (i_0_NS3) des dritten Nachschaltradsatzes (NS3) betragsmäßig gleich groß ist wie eine Standgetriebeübersetzung (i_0_NS2) des zweiten Nachschaltradsatzes (NS2).

5. Mehrstufen-Automatgetriebe nach Anspruch 1, 2 oder 3, **dadurch gekennzeichnet, daß** eine Standgetriebeübersetzung (i_0_NS3) des dritten Nachschaltradsatzes (NS3) betragsmäßig kleiner oder größer ist als eine Standgetriebeübersetzung (i_0_NS2) des zweiten Nachschaltradsatzes (NS2).

6. Mehrstufen-Automatgetriebe, mit einem als Overdrive-Planetenradsatz ausgebildeten Vorschaltradsatz (VS), mit einem als mehrgliedriges Planetengetriebe ausgebildeten Hauptradsatz, sowie mit sechs Schaltelementen (A, B, C, D, E, F), durch deren selektives Schließen eine Getriebeeingangsdrehzahl einer Antriebswelle (AN) des Mehrstufen-Automatgetriebes derart auf eine Abtriebswelle (AB)des Mehrstufen-Automatgetriebes übertragbar ist, daß zum Umschalten von einem Gang in den nächstfolgend höheren oder den nächstfolgend niedrigeren Gang von den gerade betätigten Schaltementen jeweils nur ein Schaltelement geöffnet und ein weiteres Schaltelement geschlossen wird, wobei
- ein Sonnenrad (SO_VS) des Vorschaltradsatzes (VS) an einem Getriebegehäuse (GE) des Mehrstufen-Automatgetriebes festgesetzt ist,
- ein Steg (ST_VS) des Vorschaltradsatzes (VS) mit der Antriebswelle (AN) des Mehrstufen-Automatgetriebes verbunden ist,
- der Hauptradsatz einen ersten Nachschaltradsatz (NS1) aufweist,
- ein Sonnenrad (SO_NS1) des ersten Nachschaltradsatzes (NS1) über das zweite Schaltelement (B) mit einem Hohlrad (HO_VS) des Vorschaltradsatzes (VS) und über das dritte Schaltelement (C) mit der Antriebswelle (AN) verbindbar ist,
- ein Steg (ST_NS1) des ersten Nachschaltradsatzes (NS1) über das vierte Schaltelement (D) an dem Getriebegehäuse (GE) festsetzbar ist und über das fünfte Schaltelement (E) mit der Antriebswelle (AN) verbindbar ist, und
- ein Hohlrad (HO_NS1) des ersten Nachschaltradsatzes (NS1) mit der Abtriebswelle (AB) verbunden sind,
**dadurch gekennzeichnet, daß** der Hauptradsatz einen zweiten Nachschaltradsatz, gekoppelten Nachschaltradsatz (NS23) mit zwei Hohlrädern (HO_NS2, HO_NS3), einem Sonnenrad (SO_NS23) und einem Steg (ST_NS23) aufweist, wobei
- an dem Steg (ST_NS23) des gekoppelten Nachschaltradsatzes (NS23) gelagerte Planetenräder (P_NS23) mit dem Sonnenrad (SO_NS23) und beiden Hohlrädern (HO_NS2, HO_NS3) des gekoppelten Nachschaltradsatzes (NS23) kämmen,
- das erste Hohlrad (HO_NS2) des gekoppelten Nachschaltradsatzes (NS23) über das sechste Schaltelement (F) an dem Getriebegehäuse (GE) festsetzbar ist,
- das zweite Hohlrad (HO_NS3) des gekoppelten Nachschaltradsatzes (NS23) über das erste Schaltelement (A) mit dem Hohlrad (HO_VS) des Vorschaltradsatzes (VS) verbindbar ist,
- das Sonnenrad (SO_NS23) des gekoppelten Nachschaltradsatzes (NS23) mit dem Sonnenrad (SO_NS1) des ersten Nachschaltradsatzes (NS1) verbunden ist,
- der Steg (ST_NS23) des gekoppelten Nachschaltradsatzes (NS23) mit dem Hohlrad (HO_NS1) des ersten Nachschaltradsatzes (NS1) verbunden ist,
- zur Verbindung von Abtriebswelle (AB) und dem Steg (ST_NS23) des gekoppelten Nachschaltradsatzes (NS23) ein Verbindungselement (VE) vorgesehen ist, welches räumlich gesehen axial zwischen den Hohlrädern (HO_NS2, HO_NS3) des gekoppelten Nachschaltradsatzes (NS23) hindurchgreift und das zweite Hohlrad (HO_NS3) des gekoppelten Nachschaltradsatzes (NS23) in axialer Richtung gesehen radial vollständig übergreift, und
- Antriebswelle (AN) und Abtriebswelle (AB) zueinander koaxial angeordnet sind.

7. Mehrstufen-Automatgetriebe nach Anspruch 6, **dadurch gekennzeichnet, daß** das Verbindungselement (VE) auf der dem ersten Nachschaltradsatz (NS1) gegenüberliegenden Seite des gekoppelten Nachschaltradsatzes (NS23) an den Steg (ST_NS23) des gekoppelten Nachschaltradsatzes (NS23) angeschlossen ist.

8. Mehrstufen-Automatgetriebe nach einem der Ansprüche 3, 5, 6 oder 7, **dadurch gekennzeichnet, daß** die Planetenräder (P_NS23) des gekoppelten Nachschaltradsatzes (NS23) als Stufenplanetenräder ausgebildet sind, wobei das erste Hohlrad (HO_NS2) des gekoppelten Nachschaltradsatzes (NS23) mit einer ersten Stufe der Stufenplanetenräder kämmt, das zweite Hohlrad (HO_NS3) des gekoppelten Nachschaltradsatzes (NS23) mit einer zweiten Stufe der Stufenplanetenräder kämmt, und das Sonnenrad (SO_NS23) des gekoppelten Nachschaltradsatzes (NS23) mit der ersten oder zweiten Stufe der Stufenplanetenräder kämmt.

9. Mehrstufen-Automatgetriebe nach einem der Ansprüche 1 bis 3 oder 5 bis 8, **dadurch gekennzeichnet, daß** die Hohlräder (HO_NS2, HO_NS3) des zweiten und dritten Nachschaltradsatzes (NS2, NS3) bzw. des gekoppelten Nachschaltradsatzes (NS23) geringfügig unterschiedliche Zähnezahlen aufweisen.

10. Mehrstufen-Automatgetriebe nach einem der vorigen Ansprüche, **dadurch gekennzeichnet, daß** acht Vorwärtsgänge gruppenschaltungsfrei schaltbar sind, wobei im ersten Vorwärtsgang das dritte und sechste Schaltelement (C, F), im zweiten Vorwärtsgang das zweite und sechste Schaltelement (B, F), im dritten Vorwärtsgang das fünfte und sechste Schaltelement (E, F), im vierten Vorwärtsgang das zweite und fünfte Schaltelement (B, E), im fünften Vorwärtsgang das dritte und fünfte Schaltelement (C, E), im sechsten Vorwärtsgang das erste und fünfte Schaltelement (A, E), im siebten Vorwärtsgang das erste und dritte Schaltelement (A, C) und im achten Vorwärtsgang das erste und zweite Schaltelement (A, B) geschlossen sind.

11. Mehrstufen-Automatgetriebe nach einem der vorigen Ansprüche, **dadurch gekennzeichnet , daß** in einem Rückwärtsgang das dritte und vierte Schaltelement (C, D) geschlossen sind.

12. Mehrstufen-Automatgetriebe nach einem der Ansprüche 1 bis 11, **dadurch gekennzeichnet, daß** das dritte Schaltelement (C) als Anfahrelement des Mehrstufen-Automatgetriebes vorgesehen ist.

13. Mehrstufen-Automatgetriebe nach einem der Ansprüche 1 bis 11, **dadurch gekennzeichnet, daß** das sechste Schaltelement (F) als Anfahrelement für ein Anfahren in einem Vorwärtsgang vorgesehen ist, und daß das dritte oder vierte Schaltelement (C, D) als Anfahrelement für ein Anfahren in einem Rückwärtsgang vorgesehen ist.

14. Mehrstufen-Automatgetriebe nach einem der vorigen Ansprüche, **dadurch gekennzeichnet, daß** der Vorschaltradsatz (VS) an einer Seite des Getriebegehäuses (GE) angeordnet ist, die einem mit der Antriebswelle (AN) wirkverbundenen Antriebsmotor des Mehrstufen-Automatgetriebes zugewandt ist.

15. Mehrstufen-Automatgetriebe nach einem der vorigen Ansprüche, **dadurch gekennzeichnet, daß** der dritte Nachschaltradsatz (NS3) bzw. der gekoppelte Nachschaltradsatz (NS23) an einer dem Antriebsmotor des Mehrstufen-Automatgetriebes abgewandten Seite des Getriebegehäuses (GE) angeordnet ist.

16. Mehrstufen-Automatgetriebe nach einem der vorigen Ansprüche, **dadurch gekennzeichnet, daß** die Nachschaltradsätze (NS1, NS2, NS3 bzw. NS1, NS23) des Hauptradsatzes axial in Reihe nebeneinander angeordnet sind.

17. Mehrstufen-Automatgetriebe nach einem der vorigen Ansprüche, **dadurch gekennzeichnet, daß** das zweite Schaltelement (B) benachbart zum Vorschaltradsatz (VS) angeordnet ist.

18. Mehrstufen-Automatgetriebe nach einem der vorigen Ansprüche, **dadurch gekennzeichnet, daß** das zweite Schaltelement (B), insbesondere eine Servoeinrichtung des zweiten Schaltelements (B), axial zwischen dem Vorschaltradsatz (VS) und dem ersten Nachschaltradsatz (NS1) angeordnet ist.

19. Mehrstufen-Automatgetriebe nach einem der vorigen Ansprüche, **dadurch gekennzeichnet, daß** das fünfte Schaltelement (E) näher an dem ersten Nachschaltradsatz (NS1) angeordnet ist als das dritte Schaltelement (C), insbesondere daß Lamellen des fünften Schaltelementes (E) näher an dem ersten Nachschaltradsatz (NS1) angeordnet sind als Lamellen des dritten Schaltelementes (C).

20. Mehrstufen-Automatgetriebe nach einem der vorigen Ansprüche, **dadurch gekennzeichnet, daß** ein Eingangselement des dritten und fünften Schaltelementes (C, E) als Lamellenträger ausgebildet ist, mit einem ersten Abschnitt radialer Erstreckung, der räumlich auf der dem Hauptradsatz zugewandten Seite des Vorschaltradsatzes (VS) angeordnet und mit der Antriebswelle (AN) verbunden ist, mit einem zweiten Abschnitt axialer Erstreckung, der sich an den ersten Abschnitt anschließt und den Steg (ST_VS) des Vorschaltradsatzes (VS) in axialer Richtung durchgreift, mit einem dritten Abschnitt radialer Erstreckung, der sich an den zweiten Abschnitt anschließt und auf der dem Hauptradsatz gegenüberliegenden Seite des Vorschaltradsatzes (VS) angeordnet ist und sich in radialer Richtung nach außen erstreckt, sowie mit einem vierten Abschnitt axialer Erstreckung, der sich an den dritten Abschnitt anschließt und in axialer Richtung radial oberhalb des Vorschaltradsatzs (VS) in Richtung des Hauptradsatzes erstreckt bis zu den Lamellen des dritten und fünften Schaltelementes (C, E) und dabei den Vorschaltradsatzs (VS) axial vollständig übergreift.

21. Mehrstufen-Automatgetriebe nach einem der vorigen Ansprüche, **dadurch gekennzeichnet, daß** das erste Schaltelement (A) benachbart zum dritten Nachschaltradsatz (NS3) bzw. benachbart zum gekoppelten Nachschaltradsatz (NS23) angeordnet ist.

22. Mehrstufen-Automatgetriebe nach einem der vorigen Ansprüche, **dadurch gekennzeichnet, daß** das erste Schaltelement (A) auf der dem zweiten Nachschaltradsatz (NS2) abgewandten Seite des dritten Nachschaltradsatzes (NS3) bzw. auf der dem ersten Nachschaltradsatz (NS1) abgewandten Seite bzw. des gekoppelte Nachschaltradsatzes (NS23) angeordnet ist.

23. Mehrstufen-Automatgetriebe nach einem der vorigen Ansprüche, **dadurch gekennzeichnet, daß** das Verbindungselement (VE), welches das Ausgangselement des Hauptradsatzes mit der Abtriebswelle (AB) verbindet, das erste Schaltelement (A) in axialer Richtung gesehen radial vollständig übergreift.

## Claims

1. The present invention relates to a multistep automatic transmission, with a front-mounted gear set (VS) designed as an overdrive planetary gear set, with a main gear set designed as a multigroup planetary transmission, and with six shifting elements (A, B, C, D, E, F), selective dosing of which permits a transmission input speed of an input shaft (AN) of the multistep automatic transmission to be transmitted to an output shaft (AB) of the multistep automatic transmission in such a way that when a gearshift to the next higher or to the next lower gear is performed, in each case only one of the shifting elements being actuated is opened and a further shifting element is closed, with
- a sun gear (SO_VS) of the front-mounted gear set (VS) being fixed to a transmission housing (GE) of the multistep automatic transmission,
- a web (ST_VS) of the front-mounted gear set (VS) being connected to the input shaft (AN) of the multistep automatic transmission,
- the main gear set featuring a first and a second rear-mounted gear set (NS1, NS2),
- a sun gear (SO_NS1) of the first rear-mounted gear set (NS1) and a sun gear (SO_NS2) of the second rear-mounted gear set (NS2) being connected to each other, and being connectable to a ring gear (HO_VS) of the front-mounted gear set (VS) via the second shifting element (B) and to the input shaft (AN) via the third shifting element (C),
- a web (ST_NS1) of the first rear-mounted gear set (NS1) being fixable to the transmission housing (GE) via the fourth shifting element (D), and connectable to the input shaft (AN) via the fifth shifting element (E),
- a ring gear (HO_NS1) of the first rear-mounted gear set (NS1) and a web (ST_NS2) of the second rear-mounted gear set (NS2) being connected to each other and to the output shaft (AB), and
- a ring gear (HO_NS2) of the second rear-mounted gear set (NS2) being fixable to the transmission housing (GE) via the sixth shifting element (F),
**characterized in that** the main gear set features an additional third rear-mounted gear set (NS3), with
- a sun gear (SO_NS3) of the third rear-mounted gear set (NS3) being coupled to the sun gear (SO_NS2) of the second rear-mounted gear set (NS2),
- a web (ST_NS3) of the third rear-mounted gear set (NS3) being coupled to the web (ST_NS2) of the second rear-mounted gear set (NS2),
- a ring gear (HO_NS3) of the third rear-mounted gear set (NS3) being connectable to the ring gear (HO_VS) of the front-mounted gear set (VS) via the first shifting element (A),
- a connecting element (VE) being provided for connection of the output shaft (AB) and the coupled webs (ST_NS2, ST_NS3) of the second and the third rear-mounted gear set (NS2, NS3), with the connecting element (VE) extending axially through the ring gears (HO_NS2, HO_NS3) of the second and the third rear-mounted gear sets (NS2, NS3) and -viewed in axial direction- radially overlapping the complete ring gear (HO_NS3) of the third rear-mounted gear set (NS3), and
- with input shaft (AN) and output shaft (AB) being arranged coaxially in relation to each other.

2. A multistep automatic transmission according to claim 1, **characterized in that** the third rear-mounted gear set (NS3) is arranged adjacent to the second rear-mounted gear set (NS2).

3. A multistep automatic transmission according to claim 1, **characterized in that** the second and the third rear-mounted gear sets (NS2, NS3) are combined to form a coupled rear-mounted gear set (NS23) with two ring gears (HO_NS2, HO_NS3), a common sun gear (SO_NS23) and a common web (ST_NS23) with common planetary gears (P_NS23).

4. A multistep automatic transmission according to claim 1, 2 or 3, **characterized in that** a stationary transmission ratio (i_O_NS3) of the third rear-mounted gear set (NS3) is equal to a stationary transmission ratio (i_O_NS2) of the second rear-mounted gear set (NS2).

5. A multistep automatic transmission according to claim 1, 2 or 3, **characterized in that** a stationary transmission ratio (i_ O_NS3) of the third rear-mounted gear set (NS3) is less than or greater than a stationary transmission ratio (i_0_NS2) of the second rear-mounted gear set (NS2).

6. A multistep automatic transmission, with a front-mounted gear set (VS) designed as an overdrive planetary gear set, with a main gear set designed as a multigroup planetary transmission, and with six shifting elements (A, B, C, D, E, F), selective closing of which permits a transmission input speed of an input shaft (AN) of the multistep automatic transmission to be transmitted to an output shaft (AB) of the multistep automatic transmission in such a way that when a gearshift to the next higher or to the next lower gear is performed, in each case only one of the shifting elements being actuated is opened and a further shifting element is dosed, with
- a sun gear (SO_VS) of the front-mounted gear set (VS) being fixed to a transmission housing (GE) of the multistep automatic transmission,
- a web (ST VS) of the front-mounted gear set (VS) being connected to the input shaft (AN) of the multistep automatic transmission,
- the main gear set featuring a first rear-mounted gear set (NS1),
- a sun gear (SO_NS1) of the first rear-mounted gear set (NS1) being connectable to a ring gear (HO_VS) of the front-mounted gear set (VS) via the second shifting element (B) and to the input shaft (AN) via the third shifting element (C)
- a web (ST_NS1) of the first rear-mounted gear set (NS1) being fixable to the transmission housing (GE) via the fourth shifting element (D), and connectable to the input shaft (AN) via the fifth shifting element (E), and
- a ring gear (HO_NS1) of the first rear-mounted gear set (NS1) being connected to the output shaft (AB),
**characterized in that** the main gear set features a second, coupled rear-mounted gear set (NS23) with two ring gears (HO_NS2, HO_NS3), a sun gear (SO_NS23) and a web (ST_NS23), with planetary gears (P_NS23) supported on the web (ST_NS23) of the coupled rear-mounted gear set (NS23) meshing with the sun gear (SO_NS23) and both ring gears (HO_NS2, HO_NS3) of the coupled rear-mounted gear set (NS23),
- the first ring gear (HO_NS2) of the coupled rear-mounted gear set (NS23) being fixable to the transmission housing (GE) via the sixth shifting element (F),
- the second ring gear (HO_NS3) of the coupled rear-mounted gear set (NS23) being connectable to the ring gear (HO_VS) of the front-mounted gear set (VS) via the first shifting element (A),
- the sun gear (SO_NS23) of the coupled rear-mounted gear set (NS23) being coupled to the sun gear (SO_NS1) of the first rear-mounted gear set (NS1),
- the web (ST_NS23) of the coupled rear-mounted gear set (NS23) being coupled to the ring gear (HO_NS1) of the first rear-mounted gear set (NS1),
- a connecting element (VE) being provided for connection of the output shaft (AB) and the web (ST_NS23) of the coupled rear-mounted gear set (NS23), with the connecting element (VE) extending axially through the ring gears (HO_NS2, HO_NS3) of the coupled rear-mounted gear set (NS23) and - viewed in axial direction - radially overlapping the complete second ring gear (HO_NS3) of the coupled rear-mounted gear set (NS23), and
- with input shaft (AN) and output shaft (AB) being arranged coaxially in relation to each other.

7. A multistep automatic transmission according to claim 6, **characterized in that** the connecting element (VE) is connected to the web (ST_NS23) of the coupled rear-mounted gear set (NS23) on the side of the coupled rear-mounted gear set (NS23) facing the first rear-mounted gear set (NS1).

8. A multistep automatic transmission according to one of the claims 3, 5, 6 or 7, **characterized in that** the planetary gears (P_NS23) of the coupled rear-mounted gear set (NS23) are designed as stepped planet gears, with the first ring gear (HO_NS2) of the coupled rear-mounted gear set (NS23) meshing with a first step of the stepped planet gears, the second ring gear (HO _NS3) of the coupled rear-mounted gear set (NS23) meshing with a second step of the stepped planet gears, and the sun gear (SO_NS23) of the coupled rear-mounted gear set (NS23) meshing with the first or second step of the stepped planet gears.

9. A multistep automatic transmission according to one of the claims 1 through 3 or 5 through 8, **characterized in that** the ring gears (HO_NS2, HO_NS3) of the second and third rear-mounted gear sets (NS2, NS3) or the coupled rear-mounted gear set (NS23) are **characterized by** the fact that they differ marginally with respect to the number of teeth.

10. A multistep automatic transmission according to one of the preceding claims, **characterized in that** eight range-change-free forward gears are shiftable, with the third and sixth shifting elements (C, F) being closed in the first forward gear, the second and sixth shifting elements (B, F) in the second forward gear, the fifth and sixth shifting elements (E, F) in the third forward gear, the second and fifth shifting elements (B, E) in the fourth forward gear, the third and fifth shifting elements (C, E) in the fifth forward gear, the first and fifth shifting elements (A, E) in the sixth forward gear, the first and third shifting elements (A, C) in the seventh forward gear, and the first and second shifting elements (A, B) in the eighth forward gear.

11. A multistep automatic transmission according to one of the preceding claims, **characterized in that** in a reverse gear the third and fourth shifting elements (C, D) are closed.

12. A multistep automatic transmission according to one of the claims 1 through 11, **characterized in that** the third shifting element (C) is provided as starting element of the multistep automatic transmission.

13. A multistep automatic transmission according to one of the claims 1 through 11, **characterized in that** the sixth shifting element (F) is provided as starting element for starts in a forward gear, and that the third or fourth shifting element (C, D) is provided as starting element for starts in a reverse gear.

14. A multistep automatic transmission according to one of the preceding claims, **characterized in that** the front-mounted gear set (VS) is arranged on a side of the transmission housing (GE) which faces a driving engine of the multistep automatic transmission, with the driving engine being actively connected to the input shaft (AN).

15. A multistep automatic transmission according to one of the preceding claims, **characterized in that** the third rear-mounted gear set (NS3) or the coupled rear-mounted gear set (NS23) is arranged on a side of the transmission housing (GE) not facing the driving engine of the multistep automatic transmission.

16. A multistep automatic transmission according to one of the preceding claims, **characterized in that** the rear-mounted gear sets (NS1, NS2, NS3 or NS1, NS23) of the main gear set are arranged axially in a row next to each other.

17. A multistep automatic transmission according to one of the preceding claims, **characterized in that** the second shifting element (B) is arranged adjacent to the front-mounted gear set (VS).

18. A multistep automatic transmission according to one of the preceding claims, **characterized in that** the second shifting element (B), in particular a servo unit of the second shifting element (B), is arranged axially between the front-mounted gear set (VS) and the first rear-mounted gear set (NS1).

19. A multistep automatic transmission according to one of the preceding claims, **characterized in that** the fifth shifting element (E) is arranged closer to the first rear-mounted gear set (NS1) than the third shifting element (C), in particular that disks of the fifth shifting element (E) are arranged closer to the first rear-mounted gear set (NS1) than disks of the third shifting element (C).

20. A multistep automatic transmission according to one of the preceding claims, **characterized in that** one input element each of the third and fifth shifting elements (C, E) is designed as a disk carrier, with a first radially extending section being arranged on the side of the front-mounted gear set (VS) facing the main gear set and being connected to the input shaft (AN), with a second radially extending section connecting with the first section and extending in axial direction through the web (ST_VS) of the front-mounted gear set (VS), with a third radially extending section connecting with the second section and being arranged on the side of the front-mounted gear set (VS) facing the main gear set and extending in radial direction outward, and with a fourth radially extending section connecting with the third section and extending in axial direction radially above the front-mounted gear set (VS) toward the main gear set all the way to the disks of the third and fifth shifting elements (C, E), and thereby completely overlapping the front-mounted gear set (VS).

21. A multistep automatic transmission according to one of the preceding claims, **characterized in that** the first shifting element (A) is arranged adjacent to the third rear-mounted gear set (NS3) or adjacent to the coupled rear-mounted gear set (NS23).

22. A multistep automatic transmission according to one of the preceding claims, **characterized in that** the first shifting element (A) is arranged on the side of the third rear-mounted gear set (NS3) not facing the second rear-mounted gear set (NS2) or on the side of the coupled rear-mounted gear set (NS23) not facing the first rear-mounted gear set (NS23).

23. A multistep automatic transmission according to one of the preceding claims, **characterized in that** the connecting element (VE), which connects the output element of the main gear set with the output shaft (AB), radially overlaps the complete first shifting element (A) when viewed in axial direction.

## Revendications

1. Boîte de vitesses automatique à plusieurs étages dotée d'un train d'engrenages monté en amont (VS) et conçu comme overdrive à train épicycloïdal, dotée d'un train d'engrenages principal conçu comme boîte planétaire à plusieurs étages, ainsi que de six éléments de commande (A, B, C, D, E, F), dont la fermeture sélective permet de transmettre un régime d'entrée d'un arbre d'entrée (AN) de la boîte automatique à plusieurs étages de telle manière à un arbre de sortie (AB) de la boîte automatique à plusieurs étages, que pour le passage d'un rapport au rapport immédiatement supérieur ou au rapport immédiatement inférieur des éléments de commande qui viennent d'être actionnés n'est ouvert qu'un seul élément de commande et fermé un autre élément de commande, sachant que
- un planétaire (SO_VS) du train d'engrenages monté en amont (VS) est fixé à un carter (GE) de la boîte automatique à plusieurs étages,
- une nervure (ST_VS) du train d'engrenages monté en amont (VS) est lié à l'arbre d'entrée (AN) de la boîte automatique à plusieurs étages,
- le train d'engrenages principal comporte un premier et un deuxième trains d'engrenages montés en aval (NS1, NS2),
- un planétaire (SO_NS1) du premier train d'engrenages monté en aval (NS1) et un planétaire (SO_NS2) du deuxième train d'engrenages monté en aval (NS2) sont reliés entre eux, et qu'ils peuvent être reliés par le deuxième élément de commande (B) à une couronne (HO_VS) du train d'engrenages monté en amont (VS) et par le troisième élément de commande (C) à l'arbre d'entrée (AN),
- une nervure (ST_NS1) du premier train d'engrenages monté en aval (NS1) peut être fixée par le quatrième élément de commande (D) au carter de la boîte (GE) et qu'elle peut être reliée par le cinquième élément de commande (E) à l'arbre d'entrée (AN),
- une couronne (HO_NS1) du premier train d'engrenages monté en aval (NS1) et une nervure (ST_NS2) du deuxième train d'engrenages monté en aval (NS2) sont reliées entre elles et à l'arbre de sortie (AB), et
- une couronne (HO_NS2) du deuxième train d'engrenages monté en aval (NS2) peut être fixée par le sixième élément de commande (F) au carter de la boîte (GE), **caractérisée en ce que** le train d'engrenages principal comporte, en outre, un troisième train d'engrenages monté en aval (NS3), sachant que
- un planétaire (SO_NS3) du troisième train d'engrenages monté en aval (NS3) est couplé à la couronne (SO_NS2) du deuxième train d'engrenages monté en aval (NS2),
- une nervure (ST_NS3) du troisième train d'engrenages monté en aval (NS3) est couplée à la nervure (ST_NS2) du deuxième train d'engrenages monté en aval (NS2),
- une couronne (HO_NS3) du troisième train d'engrenages monté en aval (NS3) peut être reliée par le premier élément de commande (A) à la couronne (HO_VS) du train d'engrenages monté en amont (VS),
- **en ce que** pour la liaison de l'arbre de sortie (AB) et des nervures couplées (ST_NS2, ST_NS3) du deuxième et du troisième trains d'engrenages montés en aval (NS2, NS3) est prévu un élément de liaison (VE), lequel passe axialement entre les couronnes (HO_NS2,HO_NS3) du deuxième et du troisième trains d'engrenages montés en aval (NS2, NS3) et **en ce qu'**il enjambe complètement et radialement la couronne (HO_NS3) du troisième train d'engrenages monté en aval (NS3) dans le sens axial, et
- **en ce que** l'arbre d'entrée (AN) et l'arbre de sortie (AB) sont disposés coaxialement l'un par rapport à l'autre.

2. Boîte automatique à plusieurs étages selon la revendication 1, **caractérisée en ce que** le troisième train d'engrenages monté en aval (NS3) est juxtaposé au deuxième train d'engrenages monté en aval (NS2).

3. Boîte automatique à plusieurs étages selon la revendication 1, **caractérisée en ce que** le deuxième et le troisième trains d'engrangés montés en aval (NS2, NS3) sont groupés afin de former un train d'engrenages monté en aval et couplé (NS23), avec deux couronnes (HQ_NS2, HO_NS3), un planétaire commun (SO_NS23), et une nervure commune (ST_NS23) avec des satellites communs (P_NS23).

4. Boîte automatique à plusieurs étages selon les revendications 1, 2 ou 3, **caractérisée en ce que** la valeur d'un rapport de transmission à l'arrêt (i_0_NS3) du troisième train d'engrenages monté en aval (NS3) est égale à la valeur du rapport de transmission à l'arrêt (i_0_NS2) du deuxième train d'engrenages monté en aval (NS2).

5. Boîte automatique à plusieurs étages selon les revendications 1, 2 ou 3, **caractérisée en ce que** la valeur d'un rapport de transmission à l'arrêt (i_0_NS3) du troisième train d'engrenages monté en aval (NS3) est inférieure ou supérieure à la valeur d'un rapport de transmission à l'arrêt (i_0_NS2) du deuxième train d'engrenages monté en aval (NS2).

6. Boîte de vitesses automatique à plusieurs étages dotée d'un train d'engrenages monté en amont (VS) et conçu comme overdrive à train épicycloïdal, d'un train d'engrenages principal conçu comme boîte planétaire à plusieurs étages, ainsi que de six éléments de commande (A, B, C, D, E, F), dont la fermeture sélective permet de transmettre un régime d'entrée d'un arbre d'entrée (AN) de la boîte automatique à plusieurs étages de telle manière à un arbre de sortie (AB) de la boîte automatique à plusieurs étages, q u e pour le passage d'un rapport au rapport immédiatement supérieur ou au rapport immédiatement inférieur des éléments de commande qui viennent d'être actionnés n'est ouvert qu'un seul élément de commande et fermé un autre élément de commande, sachant que
- un planétaire (SO_VS) du train d'engrenages monté en amont (VS) est fixé à un carter (GE) de la boîte automatique à plusieurs étages,
- une nervure (ST_VS) du train d'engrenages monté en amont (VS) est liée à l'arbre d'entrée (AN) de la boîte automatique à plusieurs étages,
- le train d'engrenages principal comporte un premier train d'engrenages monté en aval (NS1),
- un planétaire (SO_NS1) du premier train d'engrenages monté en aval (NS1) peut être lié par le deuxième élément de commande (B) à une couronne (HO_VS) du train d'engrenages monté en amont (VS) et par le troisième élément de commande (C) à l'arbre d'entrée (AN),
- une nervure (ST_NS1) du premier train d'engrenages monté en aval (NS1) peut être fixée par le quatrième élément de commande (D) au carter de la boîte (GE) et qu'elle peut être reliée par le cinquième élément de commande (E) à l'arbre d'entrée (AN),
- une couronne (HO_NS1) du premier train d'engrenages monté en aval (NS1) est reliée à l'arbre de sortie (AB), **caractérisée en ce que** le train d'engrenages principal d'un deuxième train d'engrenages monté en aval couplé (NS23) doté de deux couronnes (HO_NS2, HO_NS3), comporte un planétaire (SO_NS23) et une nervure (ST NS23), sachant que
- les satellites (P_NS23) logés sur la nervure (ST_NS23) du train d'engrenages monté en aval couplé (NS23) engrènent avec le planétaire (SO_NS23) et les deux couronnes (HO_NS2, HO_NS3) du train d'engrenages monté en aval couplé (NS23),
- la première couronne (HO_NS2) du train d'engrenages monté en aval couplé (NS23) peut être fixée par le sixième élément de commande (F) au carter de la boîte (GE),
- la deuxième couronne (HO_NS3) du train d'engrenages monté en aval couplé (NS23) peut être reliée par le premier élément de commande (A) à la couronne (HO_VS) du train d'engrenages monté en amont (VS),
- le planétaire (SO_NS23) du train d'engrenages monté en aval couplé (NS23) est relié au planétaire (SO_NS1) du premier train d'engrenages monté en aval (NS1),
- la nervure (ST_NS23) du train d'engrenages monté en aval couplé (NS23) est reliée à la couronne (HO_NS1) du premier train d'engrenages monté en aval (NS1),
- pour la liaison de l'arbre de sortie (AB) et de la nervure (ST_NS23) du train d'engrenages monté en aval couplé (NS23) est prévu un élément de liaison (VE), lequel passe axialement entre les couronnes (HO_NS2, HO_NS3) du train d'engrenages monté en aval couplé (NS23) et qu'il enjambe complètement et radialement la deuxième couronne (HO_NS3) du train d'engrenages monté en aval couplé (NS23) dans le sens axial, et
- l'arbre d'entrée (AN) et l'arbre de sortie (AB) sont disposés coaxialement l'un par rapport à l'autre.

7. Boîte automatique à plusieurs étages selon la revendication 6, **caractérisée en ce que** l'élément de liaison (VE) est relié, du côté du train d'engrenages monté en aval couplé (NS23) opposé au premier train d'engrenages monté en aval (NS1), à la nervure (ST_NS23) du train d'engrenages monté en aval couplé (NS23).

8. Boîte automatique à plusieurs étages selon une des revendications 3, 5, 6 or 7, **caractérisée en ce que** les satellites (P_NS23) du train d'engrenages monté en aval couplé (NS23) sont réalisés comme des satellites étagés, sachant que la première couronne (HO_NS2) du train d'engrenages monté en aval couplé (NS23) engrène avec un premier étage des satellites étagés, la deuxième couronne (HO_NS3) du train d'engrenages monté en aval couplé (NS23) engrène avec un deuxième étage des satellites étagés, et le planétaire (SO_NS23) du train d'engrenages monté en aval couplé (NS23) engrène avec le premier et le deuxième étages des satellites étagés.

9. Boîte automatique à plusieurs étages selon une des revendications 1 à 3 ou 5 à 8, **caractérisée en ce que** les couronnes (HO_NS2, HO_NS3) du deuxième et du troisième trains d'engrenages montés en aval (NS2, NS3) ou du train d'engrenages monté en aval couplé (NS23) ont un nombre de dents légèrement différent.

10. Boîte automatique à plusieurs étages selon une des revendications précédentes, **caractérisée en ce que** huit marches avant peuvent être engagées sans commutation du groupe-relais, sachant que en première vitesse avant sont fermés le troisième et le sixième éléments de commande (C, F), en deuxième marche avant sont fermés le deuxième et le sixième éléments de commande (B, F), en troisième marche avant sont fermés le cinquième et le sixième éléments de commande (E, F), en quatrième marche avant sont fermés le deuxième et le cinquième éléments de commande (B, E), en cinquième marche avant sont fermés le troisième et le cinquième éléments de commande (C, E), en sixième marche avant sont fermés le premier et le cinquième éléments de commande (A, E), en septième marche avant sont fermés le premier et le troisième éléments de commande (A, C) et en huitième marche avant sont fermés le premier et le deuxième éléments de commande (A, B).

11. Boîte automatique à plusieurs étages selon une des revendications précédentes, **caractérisée en ce que** dans une marche arrière le troisième et le quatrième éléments de commande (C, D) sont fermés.

12. Boîte automatique à plusieurs étages selon une des revendications 1 à 11, **caractérisée en ce que** le troisième élément de commande (C) est prévu comme élément de démarrage de la boîte automatique à plusieurs étages.

13. Boîte automatique à plusieurs étages selon une des revendications 1 à 11, **caractérisée en ce que** le sixième élément de commande (F) est prévu comme élément de démarrage permettant le démarrage dans une marche avant, et **en ce que** le troisième ou le quatrième éléments de commande (C, D) sont prévus comme éléments de démarrage permettant un démarrage dans une marche arrière.

14. Boîte automatique à plusieurs étages selon une des revendications précédentes, **caractérisée en ce que** le train d'engrenages monté en amont (VS) est disposé sur un côté du carter de la boîte (GE) dirigé vers un moteur d'entraînement lié activement à un arbre d'entrée (AN) de la boîte automatique à plusieurs étages.

15. Boîte automatique à plusieurs étages selon une des revendications précédentes, **caractérisée en ce que** le troisième train d'engrenages monté en aval (NS3) ou le train d'engrenages monté en aval couplé (NS23) sont disposés sur un côté du carter de la boîte (GE) opposé au moteur d'entraînement de la boîte automatique à plusieurs étages.

16. Boîte automatique à plusieurs étages selon une des revendications précédentes, **caractérisée en ce que** les trains d'engrenages montés en aval (NS1, NS2, NS3 ou NS1, NS23) du train d'engrenages principal sont disposés, dans le sens axial, en ligne et juxtaposés.

17. Boîte automatique à plusieurs étages selon une des revendications précédentes, **caractérisée en ce que** le deuxième élément de commande (B) est disposé juxtaposé par rapport au train d'engrenages monté en amont (VS).

18. Boîte automatique à plusieurs étages selon une des revendications précédentes, **caractérisée en ce que** le deuxième élément de commande (B), en particulier un dispositif d'assistance du deuxième élément de commande (B), est disposé axialement entre le train d'engrenages monté en amont (VS) et le premier train d'engrenages monté en aval (NS1).

19. Boîte automatique à plusieurs étages selon une des revendications précédentes, **caractérisée en ce que** le cinquième élément de commande (E) est disposé plus proche du premier train d'engrenages monté en aval (NS1) que le troisième élément de commande (C), et en particulier que des disques du cinquième élément de commande (E) sont disposés plus proche du premier train d'engrenages monté en aval (NS1) que des disques du troisième élément de commande (C).

20. Boîte automatique à plusieurs étages selon une des revendications précédentes, **caractérisée en ce que** un élément d'entrée du troisième et du cinquième éléments de commande (C, E) est réalisé comme porte-disques, avec une première partie s'étendant dans le sens radial et étant disposée sur le côté dirigé vers le train d'engrenages principal du train d'engrenages monté en amont (VS) et étant lié à l'arbre d'entrée (AN), avec une deuxième partie s'étendant dans le sens axial et étant attachée à la première partie, passant par la nervure (ST_VS) du train d'engrenages monté en amont (VS) en sens axial, avec une troisième partie s'étendant dans le sens radial et étant attachée à la deuxième partie et étant disposée du côté opposé du train d'engrenages principal du train d'engrenages monté en amont (VS) et s'étendant dans le sens radial vers l'extérieur, et avec une quatrième partie s'étendant dans le sens axial et étant attachée à la troisième partie s'étendant dans le sens radial au-dessus du train d'engrenages monté en amont (VS) dans le sens du train d'engrenages principal jusqu'aux disques du troisième et du cinquième éléments de commande (C, E), tout en enjambant complètement, dans le sens axial, le train d'engrenages monté en amont (VS).

21. Boîte automatique à plusieurs étages selon une des revendications précédentes, **caractérisée en ce que** le premier élément de commande (A) est disposé juxtaposé par rapport au troisième train d'engrenages monté en aval (NS3) ou juxtaposé par rapport au train d'engrenages monté en aval couplé (NS23).

22. Boîte automatique à plusieurs étages selon une des revendications précédentes, **caractérisée en ce que** le premier élément de commande (A) est disposé du côté du troisième train d'engrenages monté en aval (NS3) opposé au deuxième train d'engrenages monté en aval (NS2) ou du côté du train d'engrenages monté en aval couplé (NS23) opposé au premier train d'engrenages monté en aval (NS1).

23. Boîte automatique à plusieurs étages selon une des revendications précédentes, **caractérisée en ce que** l'élément de liaison (VE), liant l'élément de sortie du train d'engrenages principal à l'arbre de sortie (AB), enjambe le premier élément de commande (A) complètement et radialement dans le sens axial.
